# EUROPÄISCHE PATENTSCHRIFT

(11) **EP 0 581 827 B1**
(45) Veröffentlichungstag und Bekanntmachung des Hinweises auf die Patenterteilung: **27.12.1996**
(21) Anmeldenummer: 92909196.5
(22) Anmeldetag: 23.04.1992
(51) Int. Cl.: H04N 1/00, H04N 1/028

(54) **SCANNER-KAMERA MIT FOKUSSIERUNGSSYSTEM UND VORZUGSWEISE DIGITALER SIGNALAUSGABE, MIT EINEM DRUCKER ZU VERWENDEN ALS VORLAGEN-KOPIERVORRICHTUNG**
SCANNER CAMERA WITH FOCUSING SYSTEM AND PREFERABLY DIGITAL SIGNAL OUTPUT WITH A PRINTER FOR USE AS A PHOTOCOPY MACHINE
CAMERA D'EXPLORATION A SYSTEME DE FOCALISATION AYANT UNE SORTIE DE SIGNAUX DE PREFERENCE NUMERIQUES ET UNE IMPRIMANTE UTILE COMME PHOTOCOPIEUSE

(30) Priorität: 25.04.1991 DE 4113594
(43) Veröffentlichungstag der Anmeldung: 09.02.1994
(73) Patentinhaber: KIRMEIER, Josef, D-85416 Langenbach (DE)
(72) Erfinder: KIRMEIER, Josef, D-85416 Langenbach (DE)
(74) Vertreter: Schulz, Rütger, Dr. Dipl.-Phys.
(86) Internationale Anmeldenummer: EP9200906
(87) Internationale Veröffentlichungsnummer: WO9220182

(56) Entgegenhaltungen:
- DE-A- 3 805 366
- US-A- 4 825 065
- US-A- 4 922 087
- XEROX Disclosure Journal, Band 14, Nr. 3, Juni 1989, Stamford, US; R.H. Tuhro et al.: "Focusing aid for an IIT" Seite 161

## Beschreibung

Die vorliegende Erfindung bezieht sich auf eine elektronische Einrichtung, mit der Vorlagen verschiedenster Art, wie noch nachfolgend im einzelnen angegeben wird, abgelichtet werden können. Spezieller gesehen, bezieht sich die Erfindung auf ein neues Bild-Aufnahmeteil einer solchen Einrichtung und auf besondere Ausgestaltungen desselben.

Es ist bekannt, mit einem elektrostatischen Kopierer, Kopien (Electrostats) von einzelnen Blättern, von Seiten aus Büchern und dergleichen herzustellen. Für die Herstellung von Kopien von einzelnen Blättern sind solche Kopierer sehr weit entwickelt und benutzerfreundlich ausgeführt. Für das Ablichten von Seiten aus Büchern und dergleichen, und zwar insbesondere dann, wenn es sich um solche mit großem Gewicht handelt, sind solche bekannten Kopierer wenig befriedigend. Die aufgeschlagenen Bücher müssen mit der zu kopierenden Seite nach unten auf das Gerät gelegt werden, und zwar dies gut positioniert. Eine Kontrolle der Positionierung ist insbesondere für den dem Buchrücken nahen Seitenrand behindert. Insbesondere bei großem Gewicht der Bücher ist es nicht ausgeschlossen, daß bei raschem Arbeiten der Bedienungsperson es auch mal zu einem Bruch der Glasplatte des Kopierers kommen kann. Solche Kopierer können zwar mit hoher Geschwindigkeit die einzelnen Seiten kopieren, jedoch beim Kopieren von Büchern auf herkömmlichen Kopierern spielt überhaupt nur noch die Zeitdauer eine Rolle, in der eine selbst geübte Bedienungsperson das Buch in die zum Kopieren geeignete Position zu bringen vermag. Dabei ist noch völlig außer acht gelassen, welche körperliche Belastung dies für eine Bedienungsperson darstellt, die eine solche Arbeit acht Stunden pro Arbeitstag ausführen soll.

An sich in ganz anderem Zusammenhang sind Telefaxgeräte bekannt. Mit einem Telefaxgerät läßt sich von einzelnen nicht gehefteten Blättern der Seiteninhalt, sei es eine Schrift, sei es eine Graphik, im Maßstab 1:1 telegraphisch an einen Empfangsort übermitteln, an dem ein gleichartiges Gerät einen simultanen Ausdruck des jeweiligen Seiteninhalts erzeugt. Im Spezialfall kann man zwar ein gebräuchliches Telefaxgerät (gegebenenfalls zusammen mit einem zweiten solchen Gerät) auch als Kopierer für wie angegebene lose Blätter verwenden.

Bei einem Telefaxgerät ist man in relativ engen Grenzen an vorgegebene Formate gebunden. Großflächigere Vorlagen lassen sich nur in der Weise übertragen, daß sie auf eines der vorgegebenen Formate zerteilt, in Einzelblattform übertragen und schließlich wieder zusammengesetzt werden. Ein derartiges Handeln kommt aber tatsächlich nur dann in Betracht, wenn als wesentlicher Gesichtspunkt eine Fernübertragung gefordert ist.

In wiederum ganz anderem Zusammenhang sind Camcorder bekannt, die anstelle von herkömmlichen Filmkameras für die Aufnahme von Filmen verwendet werden. In solchen Camcordern wird genauso wie bei Verwendung eines Filmes jeweils ein ganzes Bildformat im Bruchteil einer Sekunde für alle Bildpunkte simultan auf einem photoelektrischen Bildpunkt-Flächensensor aufgenommen und das ausgelesene elektronische Signal auf einem Magnetband gespeichert. Die Wiedergabe erfolgt in einem Magnetband-Recorder, der mit einem Fernseh-(Video-)Gerät verbunden wird. Hauptzweck eines solchen Camcorders ist die zeitliche Speicherung des aufgenommenen Signals, worin sich auch ein solches Gerät von einem Kopierer gattungsmäßig ganz wesentlich unterscheidet.

Aus der EP-A-124098 ist ein Gerät bekannt, mit dem sich, von einem zusätzlichen Computer und Software gesteuert, auf ein Vorlagen-Tableau aufgelegte Blätter abscannen lassen. Verwendet wird ein CCD-Zeilen-sensor, der mit Spindelantrieb zeilenweise verfahren wird. Das digitale Ausgangssignal kann, vom Computer verarbeitet, auf einem Bildschirm sichtbar gemacht und/oder von einem Drucker ausgedruckt werden. Das Gerät ist für Telefax-ähnliche Obermittlung an einen entfernten Empfangsort vorgesehen. Zur Scharfeinstellung der abbildenden Optik dient ein von Hand zu betätigendes Fokussierungssystem mit Fadenkreuz. Dieses wird in die Vorlageebene projiziert und die Optik scharfgestellt.

DE-A-3 805 366 offenbart eine in der Vorlagenebene positionierte Vorrichtung zum automatischen Abgleichen eines Bildabtasters. Die Kamera des Abtasters befindet sich unterhalb der Vorlagenebene. Der Vorlagentisch wird gegenüber einem feststehenden Zeilensensor bewegt. Die Scharfeinstellung erfolgt mittels einer Musterstruktur, die sich in der Vorlagenebene befindet und auf den Zeilensensor abgebildet wird.

Als gedanklicher Ausgangspunkt für ein wie erfindungsgemäßes Gerät, und zwar vorzugsweise von der gesamten Aufgabenstellung und vom Spektrum der vorgesehenen Anwendungen her, kommt genauer besehen keines der vorgenannten Geräte in Betracht. Der elektrostatische Fotokopierer ist zwar geeignet, zumindest bei Einzelblatt-Vorlagen zeitökonomisch Ablichtungen zu liefern, da er mit entsprechend großem technischen Aufwand in der Lage ist, sehr rasch die gesamte Fläche der Vorlage auf der mit hoher Umdrehung laufenden photoelektrischen Trommel aufnehmen zu können. Für das Kopieren aus Büchern ist dieser Vorzug einer hohen Kopiergeschwindigkeit jedoch wie oben dargelegt nicht mehr entscheidend.

Aufgabe der vorliegenden Erfindung ist es, einen Weg zu einem neuen Kopiersystem zu weisen, mit dem das Kopieren insbesondere aus Büchern, Zeitschriften, aus Akten, in denen die Blätter gebunden sind oder aus denen (z.B. Grundbüchern, Gerichtsakten, geheimen Dossiers) einzelne Blätter aus Sicherheitsgründen soweit irgend möglich nicht entnommen werden sollen, dennoch ohne die oben schon dargelegten Schwierigkeiten und/oder Umständlichkeiten ausgeführt werden kann. Weitere angestrebte Aufgabenpunkte sind, konkurrenzfähig schnelles, bei Büchern und dgl. sogar vorzugsweise rascheres Kopieren zu ermöglichen, an kein Vorlagenformat gebunden zu sein und/oder leicht auszusuchende bzw. einzustellende Ausschnitte wählen und/oder auch in anderem Maßstab, jedoch in jedem Fall mit hoher Auflösung kopieren zu können.

Im Regelfall soll die Kopie unverzüglich zur Verfügung stehen.

Eine weitere Spezialisierung der Aufgabe besteht darin, ohne postalisches Versenden diese Kopie auch an einem entfernten Ort, insbesondere unmittelbar, zur Verfügung zu haben und/oder zwecks Dokumentation und/oder als Diskette, anstelle einer papierenen Kopie Vorlagen kopieren zu können.

Der voranstehend genannte Bedarf und das Beheben schon vorangehend beschriebener Mängel vermag ein "Kopiersystem" zu erfüllen, das als "Aufnahme-"Teil eine in der Weise ausgestaltete Scanner-Kamera umfaßt, wie sie in prinzipieller Ausführung im Anspruch 1 angegeben ist und zu der die Unteransprüche Weiterbildungen angeben.

Eine erfindungsgemäße bzw. erfindungsgemäß weitergebildete Kamera bzw. das System, für die eine solche Kamera ein Bestandteil ist, ist als ein autonomes, eine geschlossene Einheit bildendes, multifunktionales Gerät ausgebildet und es bietet dem Benutzer die voranstehend genannten technischen/praktischen Vorteile und weitere aus der noch nachfolgenden Detailbeschreibung hervorgehende Vorzüge. Insbesondere für das Ablichten aus schweren Büchern, Grundbüchern, Kartenwerken, Dokumentenbänden und dergleichen bietet die Erfindung zusammen mit der Arbeitserleichterung für die Bedienungsperson zweifellos auch einen Rationalisierungseffekt. Außerdem ist eine wesentlich schonendere Behandlung der Bücher und dgl. möglich. Von ganz besonderer Bedeutung ist dies für das Ablichten antiquarischer Bücher. Bei besonders alten Exemplaren dürfen diese nämlich nicht mehr als 90° geöffnet werden und können deshalb bislang nicht photokopiert werden.

Das Spektrum der Anwendung der Erfindung ist aber noch viel weiter. Mit einer erfindungsgemäßen Kamera können in Verbindung mit einem Leuchttisch auch Röntgenbilder, Dias, Filmmaterial und dgl. kopiert bzw. abgelichtet werden. Es können insbesondere auch 3-dimensionale Gegenstände, abhängig von der gewählten Optik und deren Tiefenschärfe, abgelichtet werden. Zum Beispiel für Prospekte und dgl. können von Gegenständen, die auf einem Leuchttisch plaziert sind, hintergrundfreie Bilder ohne Schatten als Bildkopie erzeugt werden. Solche Gegenstände sind z.B. Kleinteile wie Zahnräder, Werkzeuge und dgl., wie sie häufig in Prospekten abgebildet sind.

Eine erfindungsgemäße Kamera läßt sich auch in ein übliches Nikrofilm-Sichtgerät integrieren. Es können so auf Wunsch direkt lesbare Kopien hergestellt werden, oder der Bildinhalt elektronisch gespeichert werden. Im Falle automatisierter Mikrofilm-Sichtgeräte kann die Kopierfunktion in Verbindung mit der automatischen Positionierung erfolgen und nachfolgend aufgeführte Weiterverarbeitung durchgeführt werden:
a) Ausgabe von Kopien über den angeschlossenen Drucker,
b) Einspeisen des elektronischen Bildinhalts in ein hausinternes Rechnernetz, um an einem bestimmten Arbeitsplatz die Bildinformation am Bildschirm verfügbar zu haben (und von dort einen Ausdruck zu veranlassen, und
c) Einspeisung ins öffentliche Datennetz vorzunehmen, um ein Telefax oder ein Datex abzusetzen.

Eine erfindungsgemäße Kamera ist vorzugsweise mit Wechseloptik und/oder Zoomoptik auszurüsten. Sie läßt sich auch als Mikroskopaufsatz oder direkt mit Mikroskopobjektiv verwenden, um Ausdrucke von Bildern aus dem mikroskopischen Bereich zu erhalten. Zum Beispiel können in der Kriminalistik mit einer erfindungsgemäßen Kamera und einem Mikroskop Fingerabdrücke und sonstige Untersuchungen durchgeführt und rechnergestützt ausgewertet werden. Vorteilhaft ist hier die extrem hohe Auflösung der erfindungsgemäßen Kamera. Eine besonders interessante Untersuchung ist die der Abbildung und des Vergleichs der Adernstrukturen in den Fingern als nichtmanipulierbares individuelles Personenkennzeichen, z.B. anstelle von Fingerabdrücken.

Mit der erfindungsgemäßen Kamera kann infolge der Herstellbarkeit digitaler Sofortbilder auch eine elektronische Archivierung und Verwaltung der Ablichtungen erfolgen.

Eine erfindungsgemäße Kamera hat als digital oder als analog zu betreiben Eigenschaften, die keine herkömmliche Bildaufnahmeeinrichtung in sich vereint. Sie hat einen Druckeranschluß mit sofortiger Bildausgabe ohne die Notwendigkeit rechner- oder software-gestützter Zusatzeinrichtungen, einfachste Bedienungsmöglichkeit mittels übersichtlicher, an bzw. in die Kamera integrierter Funktionstasten und ohne Zuhilfenahme von Rechner und Software, sehr hohe Auflösung und Detailtreue, kleine Bauweise, obwohl die Kamera hohe Funktions-Integrationsdichte aufweist, die Möglichkeit der Fernbedienung über einen externen Rechner und die Möglichkeit, über ein integriertes Modem die hergestellte elektronische Kopie direkt in das Telefaxnetz zu geben. Der direkte Druckeranschluß gewährleistet höchste Arbeitsgeschwindigkeit.

Die erfindungsgemäße Kamera des damit ausgerüsteten Kopiersystems hat eine in der Technik der Photographie an sich übliche Objektiv-Optik, mit der von der Vorlage, z.B. einer aus einem Buch aufgeschlagenen, entsprechend stark beleuchteten Seite, ein reelles Bild in einer Bildebene abgebildet werden kann. Man läßt die Vorlage bzw. das Buch dabei auf einer der Bedienungsperson möglichst günstig angepaßt positionierten Arbeitsplatte aufliegen, und zwar mit der abzulichtenden Fläche nach oben gerichtet. Die Bedienungsperson kann dabei für noch nachfolgend beschriebene Maßnahmen bequem auf diese Vorlage schauen. Die Optik und die Bildebene befinden sich in (jeweils) darüber liegender Position, wie dies etwa von jahrzehntelang bekannten photographischen Vergrößerungsapparaten her geläufig ist.

Die erfindungsgemäße Kamera hat einen Zeilensensor, vorzugsweise einen Halbleiter-CCD-Zeilensensor, wie er im Handel ohne weiteres erhältlich ist. Während des Abtastens der Vorlage befindet sich dieser Zeilensensor auf einer jeweiligen Zeile in der erwähnten Bildebene. Durch entsprechendes Verschieben des Zeilensensors kann das in dieser Bildebene reelle Bild der Vorlage zeilenweise abgetastet werden. Statt eines Verschiebens des Zeilensensors kann bei entsprechender Position desselben mit Hilfe einer Dreh- bzw. Schwenk-Spiegelvorrichtung das zeilenweise Abtasten der Bildebene ausgeführt werden. Die dem zeilenweisen Auslesen des Bildes der Vorlage entsprechend gewonnenen, zeilenweise anfallenden Signale (Pixel-Signale) der einzelnen Bildpunkte des reellen Bildes der Vorlage sind elektrische Signale. Die Weiterverarbeitung dieser Signale kann in wahlweiser Maßgabe durchgeführt werden.

Für das Kopieren von Schriftseiten mit lediglich Hell-Dunkel-Kontrast genügt es regelmäßig, die gewonnenen Bildsignale als Ja-Nein-Signale weiterzuverarbeiten. Gleiches gilt für Kopien von Vorlagen mit Grauton-Abstufungen, bei denen jedoch diese Abstufungen in der Vorlage dem Rasterdruck entsprechend vorliegen. Die erfindungsgemäße Kamera vermag allein mit Ja-Nein-Signalen das "Bild" vorlagengetreu wiederzugeben. Umfaßt jedoch die Vorlage Bilder nach Art von Photographien mit für den einzelnen Bildpunkt abgestuften Grautönen, so kann diese Abstufung mit der erfindungsgemäßen Kamera in der Weise verifiziert werden, indem man das Ausgangssignal in Graustufen codiert weiterverarbeitet.

Als Ausrüstung zur erfindungsgemäßen Kamera zum Zwecke einer hohen "Bild-"Aufnahmegeschwindigkeit dienen folgende weitere Maßnahmen, nämlich für das Erreichen optimaler hoher Taktfrequenzen für das Auslesen einer einzelnen Zeile aus dem CCD-Zeilensensor, diesen Sensor auf einer Temperatur zwischen 50 und 60°C zu halten. Dies hat zwar ein starkes Signalrauschen zur Folge, das jedoch anschließend weggefiltert werden kann. Zusätzlich empfiehlt es sich, eine besondere Lichtquelle und besondere Betriebsweise derselben vorzusehen. Zum Beispiel eignet sich für eine Sensorzeile der Type TIC 103D die Verwendung einer Lichtquelle OSRAM DULUX L 24 W Von besonderem Vorteil ist es, die Lichtquelle des Typs zu pulsen, wobei die Pulsfolgefrequenz mindestens so hoch wie die Taktfrequenz sein soll. Das heißt, jede Zelle der Zeile wird mit mindestens je einem Lichtimpuls bestrahlt. Dabei ist es wichtig, daß die Taktfrequenz und die Pulsfrequenz der Lampe synchron sind.

Als Kopier-Beleuchtung können auch schnelle Leuchtstoffröhren verwendet werden, die mit 1 MHz betrieben werden. Die Schaltzyklen müssen auch hier mit der Abtastung der Kamera synchron sein. Es können auch gleichstrom-betriebene Lampen verwendet werden. Die erfindungsgemäße Kamera ist aber auch dazu geeignet, bei ausreichend hellem Tageslicht Kopien auch ohne künstliche Beleuchtung herzustellen, was für die Bedienungsperson natürlich ein ganz wesentlicher, insbesondere gesundheitlicher, Vorzug ist. Mit einem Akkupack ergänzt läßt sich die Kamera auch netzungebunden (im Freien) benutzen.

Von besonderem Vorteil ist es, die vorgesehene Beleuchtung so zu wählen, daß das abgegebene Lichtspektrum im sichtbaren Bereich nahezu linear ist, um auch alle Farben der Vorlage kopieren zu können.

Um eine möglichst gleiche Lichtverteilung zu erreichen, empfiehlt es sich, vor der Lichtquelle eine Streuscheibe anzubringen. Dies kann ein Kunststoffglas mit einer pyramidenförmigen Aufrauhung sein.

Ein ganz wesentlicher Bestandteil der erfindungsgemäßen Kamera ist die Scharfeinstellung bzw. sind die dafür vorgesehenen konstruktiven Maßnahmen. Ein besonderes Anwendungsgebiet der vorliegenden Erfindung ist das Kopieren aus Büchern, die, wie zum Lesen, auf einer Unterlage liegend aufgeschlagen werden. Lediglich Umblättern und gegebenenfalls Verschieben des Buches und der Kamera zueinander sind für das Kopieren von Seite zu Seite notwendig. Dabei ist natürlich wesentlich, daß sich die jeweils zu kopierende Seite in einem individuellen Abstand von der Arbeitsfläche (parallel zu dieser ausgerichtet) befindet. Beim Kopieren von aufeinanderfolgenden Seiten sind Veränderungen des Abstands von Seite zu Seite nur nach jeweils vielen Seiten zu berücksichtigen. Auf jeden Fall muß aber die erste zu kopierende Seite einer Seitenfolge optisch scharf eingestellt werden, nämlich daß in der vorgegebenen Bildebene der Kamera ein von der Sensorzeile abzutastende scharfe Bild der Vorlage vorhanden ist. Dabei tritt das Problem auf, wie die Scharfstellung eingestellt bzw. überprüft werden kann, sofern nicht eine vollautomatische Auto-Fokussierung vorgesehen ist, wie sie z.B. von DIA-Projektoren grundsätzlich bekannt ist (dort aber regelmäßig anders ausgeführt ist, als dies für die Erfindung gemäß einer besonderen Weiterbildung vorgesehen sein kann).

Ein einfach zu realisierendes und für die Anwendung der Erfindung bei vielen Benutzern auch genügendes (da die Fokussierung ja nur von Mal zu Mal vorzunehmen ist) System ist das mit visueller Schärfe-Kontrolle durch die Bedienungsperson und gegebenenfalls manueller Betätigung der Mechanik zur Schärfeeinstellung.

Als eine für diese Fokussierung bzw. Scharfeinstellung vorgesehene Zusatzmaßnahme enthält die erfindungsgemäße Kamera in diese integriert eine transparente Platte, relativ steife Folie oder dgl., die auf ihrer einen Oberfläche oder innerhalb derselben eine nicht transparente Gitter- und/oder kreisförmige Musterstruktur besitzt. Diese Platte oder dgl. ist so positioniert, daß die Ebene der Musterstruktur mit der für das Auslesen durch die Sensorzeile vorgesehenen Bildebene zusammenfällt. Diese Platte oder dgl. ist in der Kamera wegklappbar oder mit demselben Ergebnis in anderer mechanischer Weise derart entfernbar, daß diese Musterstruktur sich nur während des Vorgangs der Scharfeinstellung in der Bildebene befindet, sonst aber dem Auslesevorgang, d.h. der Bewegung der Sensorzeile oder dem Arbeiten des Drehspiegels, nicht als mechanisches und optisches Hindernis im Wege steht. Eine hierfür erforderliche Mechanik ist für den einschlägigen Fachmann problemlos, weil sie aus den schon oben erwähnten Gründen nicht mit extrem hoher Geschwindigkeit bewegt werden muß.

Durch eine in der Kamera vorgesehene Beleuchtungseinrichtung kann die Platte der Musterstruktur mit Licht derart durchleuchtet werden, daß die Optik von dieser nur scheinbar selbst leuchtenden Musterstruktur ein scharfes Bild in der dazugehörigen Gegenstandsebene der betreffenden Objektiveinstellung erzeugt. Diese Abbildung beruht auf der Umkehrbarkeit der geometrischen optischen Wege. Das schwarze Bild der Musterstruktur läßt sich auch auf einer Vorlage noch gut erkennen und scharfstellen.

Um die Scharfeinstellung der Vorlage zur erfindungsgemäß vorgesehenen Kamera durchzuführen, braucht die Bedienungsperson lediglich den Scharfeinstellungs-Vorgang (mit Beleuchtung der dann in der Bildebene befindlichen Musterstruktur) durch Knopfdruck zu aktivieren und die Lage der Kamera bzw. die Stellung der Optik zur Vorlage, nämlich zu der zu kopierenden Seite (des Buches), solange zu verändern, bis auf der Fläche dieser Seite die erwähnte Musterstruktur als scharf eingestellt festzustellen ist. Vor allem kann dabei auch der jeweils aktive Bildausschnitt, der abgetastet bzw. kopiert wird, kenntlich gemacht werden. Dies ermöglicht ein schnelles und exaktes Auswählen und/oder Positionieren (und dabei Scharfstellen) des gewünschten bzw. gewählten Ausschnitts auf bzw. aus der Vorlage. Dann kann der Kopiervorgang wie schon beschrieben durchgeführt werden.

Mit Auto-Fokussierung kann anstatt durch die Bedienungsperson die Fokussierungsbewegung mittels eines elektrischen Signals eines Fokussierungssensors durchgeführt werden. Dieser befindet sich an einer Stelle in aer Kamera, an der mit gegebenenfalls entsprechender Optik auf dessen sensorempfindlicher Fläche ein Ausschnitt der Bildebene der Kamera abgebildet wird. Scharfeinstellung liegt dann vor, wenn vom Sensor maximale Flankensteilheit zwischen einer hellen und einer dunklen Struktur festgestellt wird, wie dies bei Autofokus-Systemen mit Einstellung auf maximalen Kontrast üblich ist. Gemäß einer Weiterbildung der Erfindung ist jedoch vorgesehen, nicht direkt das Sensorsignal, sondern dessen Oberwellengehalt auszuwerten. Das Sensorsignal wird durch einen Hochpaß mit scharfer Anstiegsflanke (möglichst größer als 12 dB) hindurchgeschickt und die Schärfekorrektur wird auf maximale Intensität des Oberwellen-Intensitätsanteils eingestellt.

Bei Verwendung einer wie schon beschriebenen Musterstruktur ist man für die Autofokussierung sogar von dem Kontrast einer Vorlage unabhängig. Man geht dazu so vor, daß man die Musterstruktur gegenständlich oder als Bild derselben aus der Bildebene der Kamera - wie schon beschrieben - mit der Optik auf die jeweils gegebene Ebene der Vorlage projiziert. Der (Linien-)Kontrast der dort als Bild vorliegenden Musterstruktur wird vom Fokussensor detektiert und für gegebenenfalls erforderliche Scharfeinstellung benutzt.

Die erwähnte Musterstruktur kann auch als Testbild für die Qualität der Optik benutzt werden. Eine qualitativ hochwertige Optik liefert von der Musterstruktur mit Gitter und wenigstens einem Kreis in der Abbildungsebene dieser Musterstruktur, das ist für die Kamera die optische Gegenstandsebene, ein Bild mit einem ebensolchen Gitter und Kreis(en). Verzerrtes Gitter und/oder verzerrter Kreis beweisen mindere Qualität und geben Anlaß zu überprüfen, ob Kopien mit einem solchen Objektiv überhaupt hergestellt werden sollen.

Es ist bereits erwähnt worden, daß mit einer erfindungsgemäßen Kamera Ausschnitte der Vorlage ausgewählt werden können. Dazu bedarf es nur entsprechender Einstellung der Optik, der Wahl eines passenden Wechselobjektivs bzw. eines Zoom-Objektivs, wie dies aus der üblichen Photographie hinlänglich bekannt ist. Ein (vergrößertes) Ausschnittbild kann mit erhöhter Auflösung kopiert werden, nämlich entsprechend der unverändert bleibenden Auflösung der Sensorzeile bezogen auf die Flächenabmessung des Ausschnitts in der Gegenstandsebene.

Mit der soweit beschriebenen Kamera kann ein digitales Ausgangssignal derselben erzeugt werden, das hinsichtlich seines Informationsgehalts dem für den Kopiervorgang relevanten Inhalt der Vorlage entspricht. Man kann ein druckergerechtes Signal erhalten, mit dem ohne Zwischenschalten eines Rechners und dgl. der Drucker unmittelbar betrieben werden kann. Der Drucker kann ein Nadeldrucker sein. Wegen der Möglichkeit sehr hoher Arbeitsgeschwindigkeit der Abtastung wird jedoch vorzugsweise ein Hochgeschwindigkeits-Laserdrucker verwendet. Ein Drucker gehört regelmäßig zu dem als Kopierer vorgesehenen erfindungsgemäßen System. Da es sich jedoch um ansonsten übliche Drucker handelt, ist die Erfindung auch bereits durch die voranstehend beschriebene Scanner-Kamera verkörpert. Auch ist derjenige Teil der Erfindung, der die oben beschriebenen Fokussierung bzw. Scharfeinstellung betrifft und realisiert, nämlich die wie angegebene Musterstruktur, deren Beleuchtung und bewegliche Anbringung, bereits für sich genommen eine Erfindung insoweit, als diese Maßnahmen auch in vergleichbaren zu fokussierenden Kamerasystemen vorteilhafte Anwendung finden kann.

Das erfindungsgemäße System kann auch in der Weise benutzt werden, daß das Ausgangssignal der Kamera z.B. über Telefonleitung übertragen und anderenorts einem Drucker zugeführt wird.

Das digitale Ausgangssignal kann auch in einer Diskette gespeichert werden und diese Diskette als papierloser Aktenbestandteil aufbewahrt und zu gegebener Zeit später ausgedruckt werden.

Voranstehend ist die Erfindung mit einer Kamera mit serieller Auslesung einer Sensorzeile beschrieben.

Mit einem neuen, noch nachfolgend näher beschriebenen Zeilensensor kann die Erfindung auch mit parallelem Auslesen der Bildpunkte des Sensors durchgeführt werden. Dies ermöglicht ein entsprechend vielfach rascheres Aufnehmen einer jeweils einzelnen, zu kopierenden Zeile. Zweckmäßigerweise ordnet man dazu das (jeweilige) Halbleitersubstrat für den Sensor, für die Komperatoren und für den RAM-Speicher auf ein und demselben Träger an. Mit nur einem Takt werden dann alle CCD-Zellen gleichzeitig ausgelesen und die Signale dem Speicher übergeben.

Für Grauwert-Wiedergabe und/oder Schwellenwerteinstellung wird für serielle Auslesung der CCD-Zellen pro Zeile ein Analog/Digitalwandler nachgeschaltet. Bei parallelen Auslesen muß entsprechend für jede einzelne CCD-Zelle ein solcher Wandler vorgesehen sein. Man kann dies jedoch in der Weise umgehen, indem man die Wandlermethode ändert. An die Komparatoren wird über einen Digital/Analogwandler ein (256 Graustufen entsprechendes) 8-Bit-Signal angelegt. So sind pro Lesezeile nicht mehr als 260 Takte erforderlich. Verfährt man in dieser Weise, so kann eine DIN A4-Vorlage mit einer Grauwert-Abstufung entsprechend 8 Bit Abstufung und mit 600 dpi Auflösung in ca. 1 Sekunde gespeicherter Weise eingelesen werden. Der Speicherbedarf beträgt dabei ca. 40 MB. Für eine Vorlage, von der nur Schwarz/Weiß-Information zu kopieren ist, benötigt man dagegen nur 20 ms bei 5 MB Speicherbedarf. Die neue erfindungsgemäße Scanner-Kamera bzw. das neue Kopierer-System, für das diese Kamera Verwendung findet, ist sehr bedienerfreundlich und ökonomisch.

Auf dem für die CCD-Zeile vorgesehenen Substrat kann auch ein RAM-Speicher für die Speicherung des Informationsgehalts von 1 bis 3 Zeilen vorgesehen sein. Für die Obergabe der Daten der Zeileninformation in den Bildspeicher, der sich z.B. in der Kamera auf einer separaten Platine befindet, reicht die Zwischenspeicherung der Information einer Zeile aus. Soll jedoch simultane Ausgabe an einen Drucker erfolgen, z.B. an einen Laser-Drucker über ein Video-Interface, so ist die Zwischenspeicherung bis zu drei Zeilen sehr zweckdienlich.

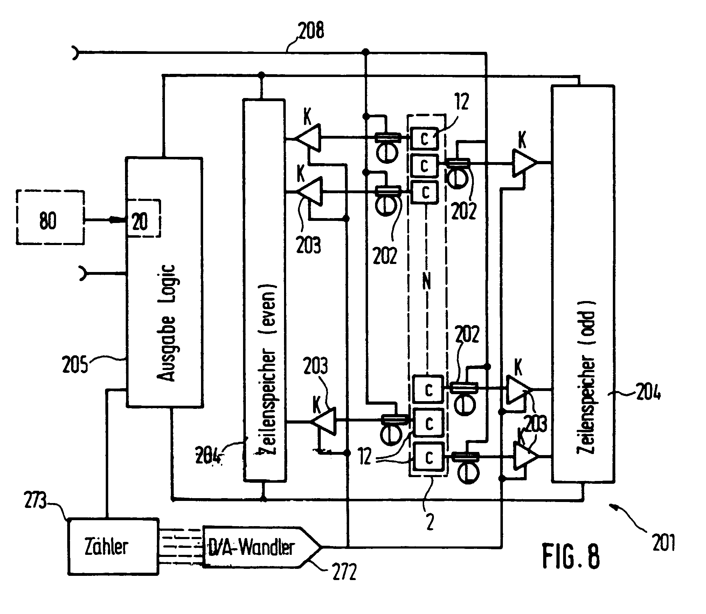

Weitere Einzelheiten zum Aufbau eines solchen neuen Sensores sind zur Figur 8 beschrieben.

Zwischen dem Ausgang sowohl des neuen als auch eines herkömmlichen, Zeilensensors und einem nachgeschalteten Komparator ist ein Verstärker vorgesehen, der vorzugsweise wahlweise linear oder logarithmisch, positiv oder negativ, arbeitet. Bei lediglich binärer Abtastung, d.h. Schwarz/Weiß-Kopie, läßt man den Verstärker im Linear-Modus arbeiten. Bei Grauton-Verarbeitung ist jedoch eine Logarithmierung der Grauskala in vielen Fällen zu empfehlen, nämlich um Dunkelflächen und/oder Weißflächen anzupassen, also hervorzuheben oder abzusenken.

Die Bedienung der Kamera erfolgt vorteilhafterweise über ein integriertes Tastenfeld. Es können die gewünschten Parameter, wie Betriebsart, Auflösung, Abtastkoordinaten und Ausgabeformat einfach durch Tastendruck aktiviert bzw. bestimmt werden. In einem Eprom ist die Befehlssequenz abgelegt. Das Eprom kann auch über Escape-Sequenzen über einen SCSI-Anschluß von einem externen Rechner gesteuert werden. Die Beleuchtung der zur Scharfstellung benutzten Musterstruktur ist nur während dieser Scharfstellung eingeschaltet. In dieser Zeit ist die externe Beleuchtung für den Kopiervorgang ausgeschaltet.

Zur Vermeidung von Mängeln, die auf Oberstrahlungen beruhen, ist auch ein Minimum-/Maximum-Pegelmesser vorgesehen, der mit einer Anti-Blooming-Einrichtung des Sensors gekoppelt ist und von dem aus die Blende des Objektivs geregelt wird. Zum Beispiel wird der Sensor zur automatischen Einstellung des Blendenwertes einmal über das projizierte Bild der Vorlage verfahren, womit Ninimum, Maximum und/oder die Intensitätsverteilung der Helligkeit überprüft werden kann. Mit Hilfe eines Spitzendetektors wird der für den verwendeten Sensor angepaßte höchst mögliche Blendenwert ermittelt und eingestellt.

Weitere Erläuterungen gehen aus der nachfolgenden Beschreibung von Figuren zu Ausführungsbeispielen der Erfindung hervor.
- Figur 1: zeigt eine schematische Seitenansicht einer erfindungs-gemäßen Kamera.
- Figur 2: zeigt die Ansicht eines Schnittes der Figur 2 mit der Schnittebene in der Bildebene, und zwar eine Ansicht von der Optik aus in Richtung auf die Musterstruktur.
- Figur 3: zeigt zur Figur 1 ergänzend eine Ausführungsform mit stillstehendem Zeilensensor und mit Drehspiegelanordnung.
- Figur 4: zeigt eine Ausführungsform mit Auto-Fokus-System.
- Figuren 5a und 5b: zeigen in Seitenansicht und in Aufsicht eine alternative Ausführung für den mechanischen Antrieb des Zeilensensors.
- Figuren 6a und 6b: zeigen einen hydraulischen Antrieb in zwei Varianten.
- Figur 7: zeigt ein Blockschaltbild mit den elektronischen Elementen einer erfindungsgemäße Kamera.
- Figur 8: zeigt den neuen Zeilensensor für paralleles Auslesen.

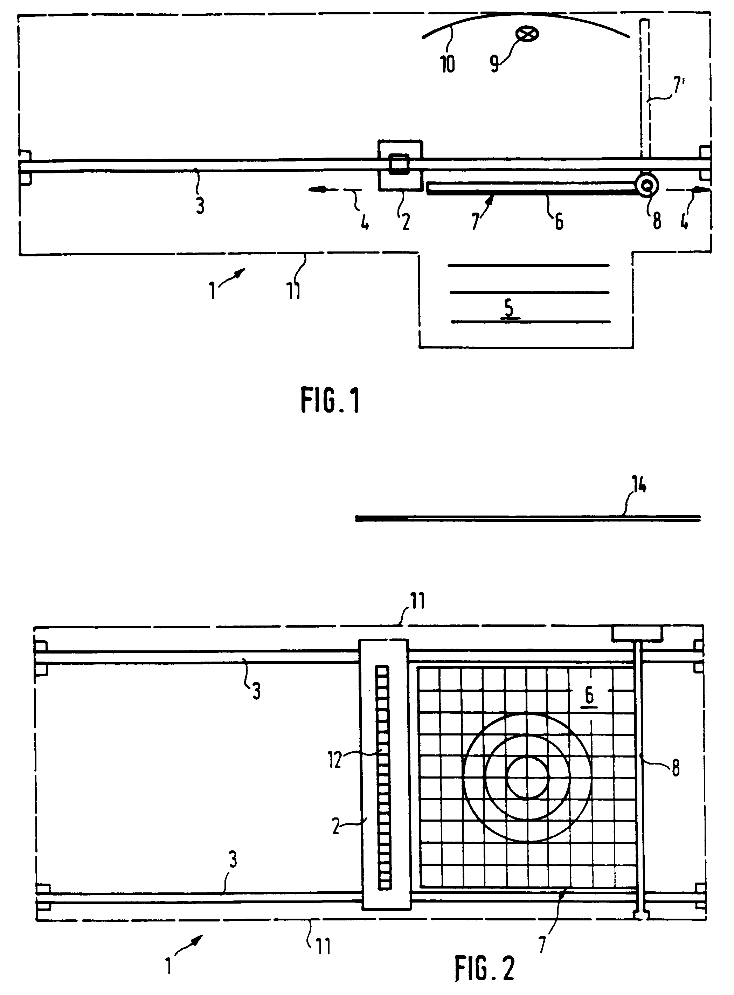

Mit 1 ist eine erfindungsgemäße Scanner-Kamera bezeichnet, die einen Zeilensensor 2 besitzt, der auf Führungen 3 horizontal mit entsprechendem Antrieb zu bewegen ist. Die Ausrichtung der Sensorzeile ist senkrecht zur Ebene der Figur 1. Mit 4 ist die Bildebene angedeutet. Die Optik, ein für den Einzelfall ausgewähltes Objektiv, ist mit 5 bezeichnet. Mit 20 ist die Betriebselektronik für z.B. das Auslesen für beispielsweise einen CCD-Sensor bezeichnet.

Für die oben beschriebene Scharfeinstellung ist eine Musterstruktur 6 vorgesehen, die sich auf der in der Bildebene 4 liegenden Oberfläche einer transparenten, beispielsweise aus durchsichtigem Glas bestehenden Platte befindet. Mit 7' ist die weggeklappte Stellung der Platte 7 angedeutet. Mit 8 ist die andeutungsweise dargestellte Dreh- bzw. Schwenkachse der Platte 7 bezeichnet. Während des Scharfeinstellens befindet sich die Platte 7 in der in Figur 1 dargestellten Stellung. In dieser Position kann die Musterstruktur 6 der Platte 7 mittels der Lichtquelle 9 und deren Fokussiersystem 10 ganzflächig ausgeleuchtet werden, sodaß die Optik die schwarze Musterstruktur deutlich sichtbar in der Gegenstandsebene 14 auf der Vorlage abbilden kann. Damit läßt sich die oben beschriebene visuelle Scharfeinstellung der in der Gegenstandsebene 14 befindlichen Vorlage von der Bedienungsperson durchführen. Die Gegenstandsebene liegt parallel zur Bildebene 4 in entsprechendem Abstand von der Optik 5 unterhalb derselben. Mit 11 ist ein Gehäuse der Kamera 1 angedeutet. Die Musterstruktur umfaßt ein Fadenkreuz und vorzugsweise auch Kreisstrukturen. Damit lassen sich eine Linearität und dgl. der abbildenden Optik überwachen.

Figur 2 zeigt die erwähnte Ansicht der Figur 1 von unten, und zwar von der Optik her auf die Musterstruktur 6 der mit der Schwenkachse 8 gehaltenen Platte 7. Die Platte 7 befindet sich in der Position zur Ausführung des Scharfeinstellens. Die Lichtquelle 9 befindet sich in dieser Ansicht hinter der Platte 7 und deren Musterstruktur 6.

Mit 2 ist wieder die Sensorzeile bezeichnet, und zwar in der Aufsicht auf die in der Bildebene 4 liegenden, andeutungsweise dargestellten lichtelektrisch empfindlichen Flächen der Sensorzellen 12.

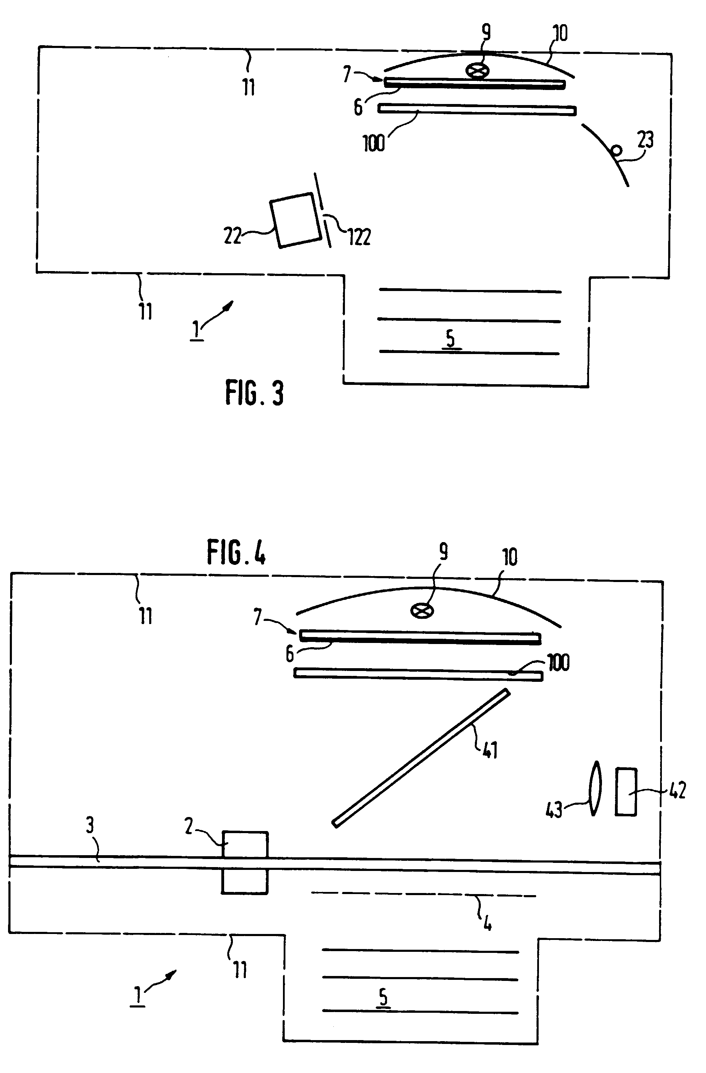

Figur 3 zeigt eine variierte Ausführungsform einer erfindungsgemäßen Scanner-Kamera. Diese Ausführungsform nach Figur 3 hat eine fest eingebaute Sensorzeile 22. Mit Hilfe des Drehspiegels 23 kann ein jeweiliger Anteil der in der Bildebene 4 liegenden Projektionsfläche derart auf den Eintrittsspalt 122 des Zeilensensors 22 geworfen werden, daß damit im Ergebnis bei entsprechender Drehung des Spiegels die Projektionsfläche zeilenweise aus der Bildebene 4 in den Zeilensensor 22 gespiegelt wird. Mit 7 ist wieder die Platte mit der Musterstruktur 6 bezeichnet. Die Beleuchtung ist in Figur 3 (in den Einzelheiten nicht näher dargestellt) wieder mit 9 bezeichnet.

Figur 4 zeigt einen prinzipiellen Aufbau für Auto-Fokussierung. Mit 2 ist wieder der auf seinen Führungen 3 befindliche Zeilensensor bezeichnet. Mit 5 ist die Optik wiederum lediglich schematisch kenntlich gemacht. Die Platte 7 mit der Musterstruktur 6 und die für die Musterstruktur 6 vorgesehene Beleuchtung 9 mit deren Reflektorsystem 10 und die Optik 100 zur Abbildung der Musterstruktur sind oberhalb eines teildurchlässigen Spiegels 41 in der Kamera der Figur 4 angebracht. Für den Vorgang der Scharfeinstellung wird die Musterstruktur 6 durch den Spiegel 41 hindurch in die Bildebene 4 und von der scharfzustellenden Optik 5 in die Gegenstandsebene projiziert, in der sich zweckmäßigerweise zu diesem Zeitpunkt eine nachfolgend zu kopierende Vorlage befindet.

Mit dem Fokussensor 42 und dessen Optik 43 wird über den teildurchlässigen Spiegel 41 die Scharfeinstellung der Optik 5 hinsichtlich dieser Gegenstandsebene und der vom Sensor 2 nachfolgend abzutastenden Bildebene 4 (unter Verwendung eines entsprechenden Objektivantriebs) nachfokussiert.

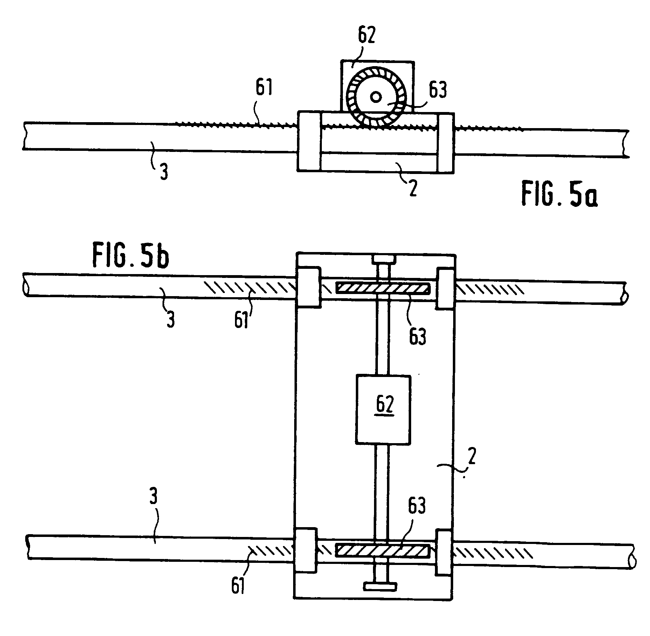

Die Figuren 5a und 5b zeigen vergleichsweise zur Figur in einer Ansicht von oben ein Antriebsprinzip für den auf den Führungen 3 über die Projektionsfläche der Bildebene 4 schrittweise von Zeile zu Zeile zu verschiebenden Zeilensensor 2. Mit 62 ist ein Schrittmotor bezeichnet. Die Führungen 3 sind mit zusätzlicher Verzahnung 61 versehen. Der Motor 62 besitzt zwei Abtriebszahnräder 63, mit denen der Sensor 2 mit seinem darauf befestigten Motor 62 schrittweise präzise hin und her verfahren werden kann. Die Anordnung der Führungen und der Antriebsverbindung ist derart, daß die lichtoptischen Wege nicht durch konstruktive Teile gestört, z.B. abgeschattet sind.

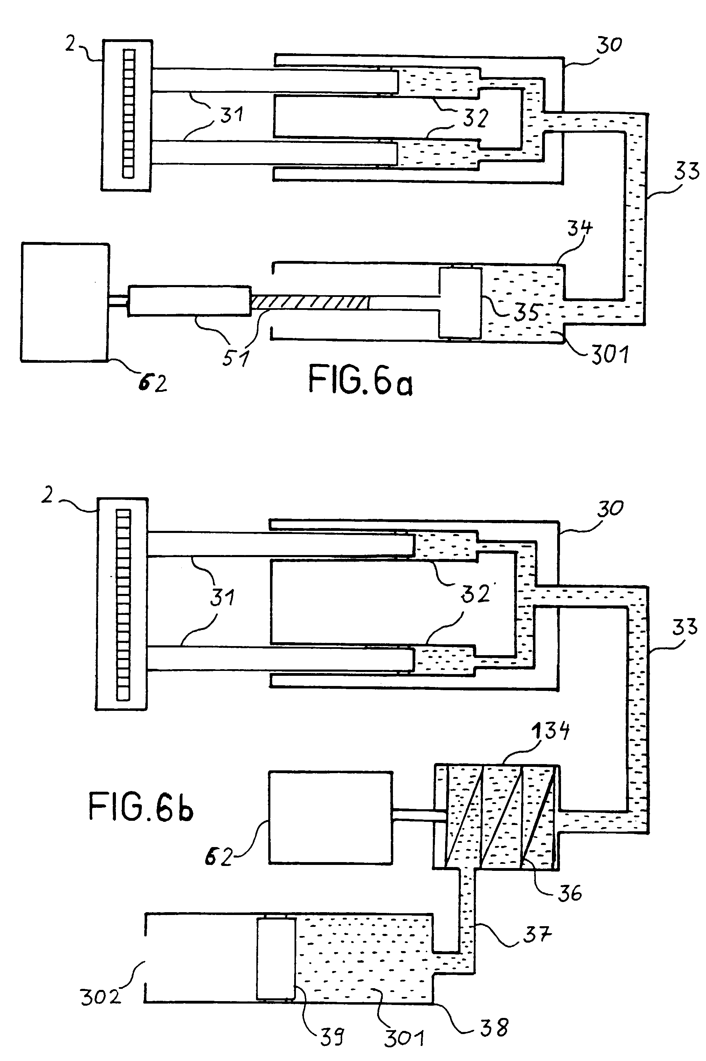

Um den Zeilensensor 2 besonders erschütterungsfrei/exakt in der Bildebene der Kamera, und zwar insbesondere mit Geschwindigkeiten von mehr als 50 mm/sec, in den Führungen verschieben zu können, ist gemäß einer Weiterbildung der Erfindung ein hydraulisches Antriebssystem gemäß den Figuren 6a bzw. 6b vorgesehen.

Von einer mit dem Stell-/Schrittmotor angetriebenen Geber-Zylinder-Kolbeneinheit 34, 35 wird ein Hyaraulikmittel 301 in einem Leitungssystem 33 in Bewegung versetzt. In einer Nehmer-Kolbenzylindereinheit 30, 31, 32 verschiebt dieses Hyuraulikmittel die z.B. zwei parallelen Kolben 31, mit denen der in seinen Führungen verschiebbare Zeilensensor 2 mechanisch gekoppelt ist. Dieser Antrieb ist frei von Schwingungen der Antriebsbewegung, wobei auch Dämpfungen zusätzlich vorgesehen sein können. Zwischen dem Motor 62 und dem Geberzylinder 35 kann noch eine Viskos-Federkupplung 51 oder dgl. eingefügt sein.

Dieses hydraulische Antriebssystem kann mit Druck in Richtung der Nehmereinheit 30, sie kann aber auch in Gegenrichtung durch Erzeugen von "Unterdruck" im Geberzylinder 34 betrieben werden. Der Zeilensensor 2 läßt sich so vom Motor 62 steuerbar angetrieben hin- und herverschieben.

Durch das Tandemsystem der Nehmereinheit 30 ist infolge des Hydraulikprinzips absolute Gleichheit und Gleichmäßigkeit des parallelen Antriebs des Zeilensensors 2 gewährleistet.

Es ist ein nicht harzendes Hydraulikmittel mit ausreichend hohem Siedepunkt zu verwenden. Durch Wahl der hydraulischen Obersetzung zwischen Geber- und Nehmereinheit lassen sich sogar auf 1 µm genaue Positionen und 1 µm-Schritte des Zeilensensors störungsfrei erzielen.

Eine Variante des Antriebssystems nach Fig. 6a ist in Fig. 6b gezeigt. Zur Fig. 6a beschriebene Einzelheiten der Fig. 6b gelten sinngemäß. Die Variante der Fig. 6b sieht zur Förderung des Hydraulikmittels eine Förderschnecke 36 in einem Zylinder 134 der Gebereinheit vor. Der Motor 62 treibt hier die Rotation der Förderschnecke 36 an. Diese Variante ist für Verschieben des Zeilensensors in beiden Richtungen besonders geeignet. Mit 38 ist ein durch einen verschiebbaren Kolben 39 abgedichteter Ausgleichsbehälter mit einer Öffnung 302 bezeichnet.

Dieses Antriebssystem der Fig. 6b erbringt im wesentlichen die gleichen Vorteile wie das System der Fig. 6a.

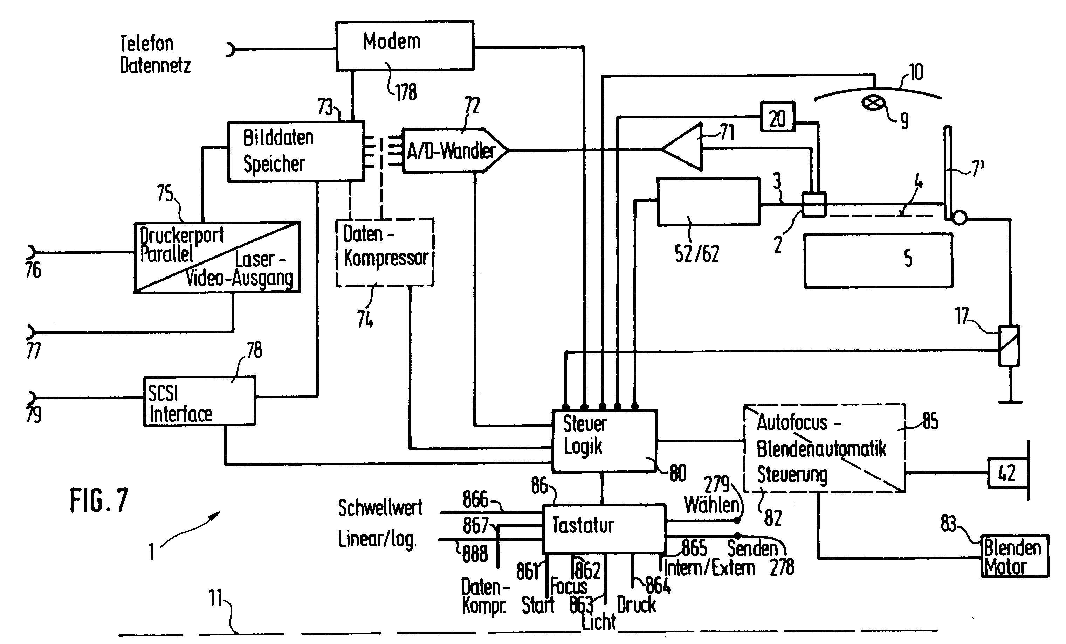

Figur 7 zeigt wieder eine erfindungsgemäße Kamera 1 mit ihrem angedeuteten Gehäuse 11. Bereits oben beschriebene Einzelheiten der Kamera haben in der Figur 7 die identischen Bezugszeichen. Die Platte 7 befindet sich in der Darstellung der Figur 7 in der Position des Auslesens mittels des Zeilensensors 2. Mit 17 ist ein Antrieb für die Platte 7 bezeichnet. Auch in dieser Darstellung befindet sich die Gegenstandsebene in einem Abstand unterhalb der Optik 5.

Der Ausgangsverstärker des Zeilensensors ist mit 71 bezeichnet. Sein Ausgangssignal geht an einen Analog/Digitalwandler 72 und von dort an einen Bilddatenspeicher 73 und gegebenenfalls einen Daten-Kompressor 74. Mit dem Block 75 kann das Ausgangssignal des Bilddatenspeichers an einen Ausgang 76 für den Anschluß eines Druckers und/oder an einen Lese-Videoausgang 77 gegeben werden. Letzterer ist insbesondere für das Verwenden der erfindungsgemäßen Kamera zum Lesen von verkleinerten Vorlagen, z.B. Mikrofilmen, bestimmt. Gegebenenfalls ist vorgesehen, über ein SCSI-Interface 78 ein Signal des Bilddatenspeichers 73 an den Ausgang 79 zu geben. Mit 80 ist eine Steuerlogik bezeichnet. Sie dient zur notwendigen oder auch nur fakultativen Ansteuerung eines Antriebs für das Wegklappen der Glasplatte 7, des Ein- und Ausschaltens der während des Vorganges des Scharfeinstellens verwendeten Beleuchtungsquelle 9, einer Blendenautomatik mit einem Blenden-Stellmotor 83 und für die schon erwähnte Auto-Fokuseinrichtung 85 mit einem Fokussensor 42. Mit 86 ist eine Tastatur bezeichnet. Sie kann eine Starttaste 861, eine Taste 862 für das Aktivieren der Scharfeinstellung, eine Taste 863 für das Aktivieren der Kopier-Beleuchtung und eine Taste 864 für "Drucken" haben. Ein Schalter 865 kann für Umschalten von intern auf extern und umgekehrt vorgesehen sein. Weitere Tasten 866 bis 868 können für die Einstellung des Schwellenwerts, für die Umschaltung von linearer auf logarithmische Empfindlichkeit und für die Datenkompression vorgesehen sein. Ein Modem für Telefax-Obertragung ist mit 178 bezeichnet. Gesteuert wird das Modem von den Tasten (bzw. Anschlüssen) 278 und 279.

Bei nur binärer Ausgabe arbeitet der Wandler 72 nur als Schwellenwertsteller (Pegeldiskriminator). Ist die Kamera für ausschließlich binäre Ausgabe bestimmt, kann der Wandler 72 durch einen Komparator ersetzt sein. Dieser wird für manuellen Betrieb mittels eines Potentiometers eingestellt. Für automatische Einstellung dieses Komparators ist dieser mit einem Digital/Analogwandler verbunden, der von der Logik 80 angesteuert wird.

Figur 8 zeigt den neuen Zeilensensor 201 für paralleles Auslesen. Die Sensorzellen 12 der eigentlichen Sensorzeile 2 sind, vorzugsweise wechselseitig, geschaltet, und zwar mit einer Serienschaltung aus einem Verstärker 202 mit wählbarer (linearer, positiv logaritmischer oder negativ logarithmischer) Verstärkerungskennlinie und einem Komparator 203. Die Ausgänge der jeweiligen Komparatoren 203 sind mit jeweils einem der beiden Zeilenspeicher 204 verbunden, wie dies die Figur 8 zeigt. Das wechselseitige Anschließen ermöglicht eine dichtere Packung, gesehen in Richtung der Sensorzeile. Die beiden Zeilenspeicher 204 sind in der Ausgabelogik 205 zusammengefaßt. Außerdem ist ein vorzugsweise extern angeordneter Digital/Analogwandler 272 mit einem Zähler 273 vorgesehen, die vorteilhafterweise beide ebenfalls auf der Platine des Bilddatenspeichers 73 angeordnet sind. Der Zähler 272 ist mit der Ausgabelogik 205 gekoppelt. Gesteuert wird dieser Sensor 201 von der Steuerlogik 80.

Im wesentlichen faßt dieser neue Zeilensensor 201 in sich die Zeile 2, 20, 71 und 72 der bisher beschriebenen Ausführungsformen zusammen.

Mit 208 ist eine Steuerleitung bezeichnet, über die die Auswahl der jeweiligen Verstärkungskennlinie erfolgen kann.

Der neue Sensor 201 hat die wie folgt beschriebene Funktionsweise. Vom Digital/Analogwandler wird ein Treppensignal mit zeitlich stufenweise ansteigendem Pegel gleichzeitig an alle Komparatoren 203 angelegt. Es werden dabei und damit die Grauwert-Stufen aller Zellen 12 der Sensorzeile 2 gleichzeitig abgefragt. Wiederum gleichzeitig wird aber laufend die Identität der einzelnen Zellen von der Ausgabelogik 205 her über die Zeilenspeicher 204 festgestellt. Spricht ein jeweiliger Komparator auf den detektierten Grauwert einer jeweiligen Zelle an, wird gleichzeitig registriert, welche eine oder mehrere Zellen 12 diesen aktuellen Grauwert als Sensorsignal aufweisen. Dieses Abfrageprinzip erfordert für z.B. vorgebenemaßen 256 Grauwertstufen und z.B. 5000 Zellen 12 einer Sensorzeile 2 nur 256 Abfragetakte, zuzüglich vier Setztakte. Bei herkömmlichen Zeilensensoren mit seriellem Auslesen wären hierfür 5000 Takte erforderlich. Dies zeigt die sehr viel höhere Auslesegeschwindigkeit des neuen Zeilensensors für eine vorgegebene Anzahl von Sensorzellen (Pixel). Mit einem solchen neuen Sensor kann mit der erfindungsgemäßen Kamera eine DIN A4-Seite in z.B. nur wenigen Sekunden ausgelesen werden.

Bei der Erfindung hat ein Zeilenspeicher 204 z.B. eine Tiefe von 8 bit entsprechend 256 Grauwerte.

Alle Komparatoren, sowohl even als odd werden mit einem Taktzyklus abgefragt und der logische Ausgangswert des Komparators in die entsprechende Adresse des Zeilenspeichers übernommen. Dies geschieht parallel. Danach wird der Zähler des Digital/Analogwandlers um ein bit inkrementiert und die Komparatoren werden erneut abgefragt und in das zweite Adress-Segment des Zeilenspeichers, entsprechend dem zweiten bit, übernommen. Dies geschieht bis alle 8 bit Adress-Segmente des Zeilenspeichers voll sind. Danach erfolgt eine Rücksetzung des Zählers. Während der nun erneut folgenden Integrationszeit (Ladezeit) der Sensorzellen wird der Speicher, even und odd, in den Bilddatenspeicher 73 für die weitere Verarbeitung eingelesen.

Das Vorsehen eines Log/Antilog-Verstärkers bewirkt eine wesentliche Funktion des Sensors. Um die CCD-Zellen in entsprechend kurzen Integrationszyklen auslesen zu können, muß eine entsprechend hohe Anzahl an Ladungsträgern zur Verfügung stehen. Vergleichsweise müßte eine Beleuchtung mit ungemein hoher Energiedichte verwendet werden, was für die Bedienungsperson kaum zumutbar und auch technisch nur umständlich zu realisierer wäre.

Eine erfindungsgemäße Kamera hat eine sehr hohe Auflösung für das Abtasten, und zwar dies sowohl mit einem herkömmlichen, seriell auszulesenden als auch mit dem voranstehend beschriebenen neuen, parallel auszulesenden Zeilensensor.

Ein wie oben beschriebener neuer, parallel auszulesender Zeilensensor kann auch in anderen Fällen anstelle eines herkömmlichen Zeilensensors mit serieller Auslesung mit Vorteil verwendet werden.

## Patentansprüche

1. Kopiervorrichtung, insbesondere für Bücher,
mit einer Scanner-Kamera (1) zum Abtasten von für einen Kopiervorgang beleuchtbaren Vorlagen,
mit einer einstellbaren Optik (5) zur lichtoptischen Projektion der Vorlage in eine Bildebene (4) der Scanner-Kamera (1),
wobei die Scanner-Kamera einen photoelektrischen Zeilensensor (2) umfaßt, mit dem das Bild der Vorlage in der Bildebene zeilenweise abgetastet wird,
mit einer elektronischen Schaltung (71, 72) zur Gewinnung eines Ausgangssignals aus dem Abtastsignal des Zeilensensors (2) und zu dessen Übergabe an einem Ausgangsanschluß, dadurch gekennzeichnet, daß die Scanner-Kamera (1) oberhalb der Vorlagenebene (14) angeordnet ist, und daß eine Einrichtung (6-10) zum Einstellen und/oder Prüfen der optimalen Bildschärfe der Projektion einer Vorlage in der Bildebene (4) der Scanner-Kamera vorgesehen ist, die eine optisch abbildbare Musterstruktur (6) und eine Beleuchtungsquelle (9) umfaßt, so daß durch Einstellen der Optik (5) in der Vorlagenebene (14) ein auf seine Schärfe hin überprüfbares Bild der Musterstruktur (6) erzeugt wird.

2. Kopiervorrichtung nach Anspruch 1, bei der die Musterstruktur (6) für den Einstell- und/oder Prüfvorgang gegenständlich in die Bildebene (4) zu bringen ist.

3. Kopiervorrichtung nach Anspruch 1, bei der die Musterstruktur (6) mittels einer für sie vorgesehen Optik (100) in die Bildebene (4) der Kamera (1) zu projizieren ist.

4. Kopiervorrichtung nach Anspruch 1 oder 2, gekennzeichnet dadurch, daß die Musterstruktur (6) eine auf einer Platte (7) befindliche Struktur ist, wobei diese Platte in der Kamera derart wegklappbar (71) angebracht ist, daß sie für den Ausleseprozeß dem dafür verwendeten Sensor (2) Raum zum Abtasten der Bildebene (4) läßt.

5. Kopiervorrichtung nach Anspruch 1, 2 oder 3, gekennzeichnet dadurch, daß die Musterstruktur (6) eine auf einer steifen Folie befindlichen Struktur ist, wobei diese steife Folie in der Kamera derart angebracht ist, daß sie durch Wegschieben für den Ausleseprozeß dem dafür verwendeten Sensor Raum zum Abtasten des Bildebene läßt.

6. Kopiervorrichtung nach Anspruch 4 oder 5,
bei der die Platte bzw. Folie transparent durchsichtig ist, sich die Beleuchtungsquelle bezogen auf die Optik (5) hinter der Musterstruktur befindet und die Musterstruktur (6) als schwarzes Muster projiziert abgebildet wird.

7. Kopiervorrichtung nach Anspruch 4 oder 5,
bei der die Beleuchtungsquelle derart seitlich der Platte bzw. Folie angebracht ist, daß diese dann als Lichtleiter wirksam ist.

8. Kopiervorrichtung nach einem der Ansprüche 1 bis 7, bei der die Musterstruktur (6) in der Bildebene (49) die ganze Fläche der Projektionsfläche ausfüllt und so in der Gegenstandsebene (14) bzw. auf der Vorlage die mit der Optik (5) jeweils eingestellte Größe der aktiven Fläche der Kamera anzeigt.

9. Kopiervorrichtung nach einem der Ansprüche 1 bis 8, mit einer autofokussierenden Einrichtung (41-43) zum iterativen Feststellen der Scharfeinstellung der Optik (5) hinsichtlich der Musterstruktur (6).

10. Kopiervorrichtung nach Anspruch 9,
in der ein halbdurchlässiger Spiegel (41) vorgesehen ist, um aus einer Richtung die Musterstruktur (6) mittels deren Optik (100) in die Bildebene (4) zu projizieren und aus einer anderen Richtung mittels eines dafür vorgesehenen Fokussensors (42) und dessen Optik (43) die Scharfeinstellung desjenigen Bildes der Musterstruktur (6) zu prüfen, das mittels der Optik (5) der Kamera (1) in der Ebene (14) der zu kopierenden Vorlage erzeugt ist.

11. Kopiervorrichtung nach einem der Ansprüche 1 bis 10, mit einem Halbleiter-CCD-Zeilensensor.

12. Kopiervorrichtung nach einem der Ansprüche 1 bis 11, mit einem parallel auszulesenden Zeilensensor (201).

13. Kopiervorrichtung nach Anspruch 12,
mit einer Heizvorrichtung für den Zeilensensor (2).

14. Kopiervorrichtung nach einem der Ansprüche 1 bis 13, bei der der Zeilensensor (2) durch schrittweise Parallelverschiebung in der Bildebene (4) über die Projektionsfläche hinweg zum Zwecke zeilenweisen Abtastens verschoben wird.

15. Kopiervorrichtung nach Anspruch 14,
bei der die Parallelverschiebung des Zeilensensors (2) auf Führungsschienen (3) mittels Antrieb durch einen Schrittmotor (62) erfolgt.

16. Kopiervorrichtung nach Anspruch 14,
bei der die Parallelverschiebung des Zeilensensors (2) auf Führungsschienen (3) mittels Antrieb durch einen Schrittmotor (62) unter Verwendung eines Zahnrad-Zahnstangenantriebs (63, 61) erfolgt.

17. Kopiervorrichtung nach Anspruch 16,
bei der sich der Antriebsmotor (62) auf dem Schlitten des Zeilensensors befindet und eine dort angebrachte Welle antreibt, die mit Zahnrädern (63) an deren Enden versehen ist, wobei diese Zahnräder (63) auf Zahnstangen (61) der Führungsebene (3) laufen.

18. Kopiervorrichtung nach Anspruch 14 oder 15,
mit einem hydraulischen Antriebssystem (Fig. 6a) für die Bewegung des Zeilensensors (2),
wobei dieses Antriebssystem eine Geber-Kolben-Zylindereinheit (34, 35) mit einem Stell-/Schrittmotor (62) zu deren Antrieb, ein hydraulisches Leitungssystem (33) und eine Nehmer-Kolben-Zylindereinheit (30, 31, 32) umfaßt und
wobei der bzw. die Kolben (31) der letzteren Einheit (30, 31, 32) in Schub- und/oder Zugverbindung mit dem zu verschiebenden Zeilensensor (2) ist bzw. sind.

19. Kopiervorrichtung nach Anspruch 14 oder 15,
mit einem hydraulischen Antriebssystem (Fig. 6b) für die Bewegung des Zeilensensors (2),
wobei dieses Antriebssystem eine von einem Stell-/Schrittmotor (62) angetriebene und ein Hydraulikmittel (301) steuerbar fördernde Einrichtung (134, 36), ein hydraulisches Leitungssystem (33), eine Nehmer-Kolben-Zylindereinheit (30, 31, 32) und einen Ausgleichsbehälter (38) umfaßt,
wobei der bzw. die Kolben (31) der letzteren Einheit (30, 31, 32) in Schub- und/oder Zugverbindung mit dem zu verschiebenden Zeilensensor (2) ist bzw. sind.

20. Kopiervorrichtung nach einem der Ansprüche 1 bis 19, mit einer Schwenk-/Drehspiegel-Einrichtung (23), mit der die Projektionsfläche durch Schwenken bzw. Drehen des Spiegels, zeilenweise abgetastet, aus der Bildebene (4) auf die photoelektrische Empfangsfläche (12) des Zeilensensors (2) gespiegelt wird.

21. Kopiervorrichtung nach einem der Ansprüche 1 bis 20, bei der eine Tastatur (86) zur Aktivierung der einzelnen Betriebsvorgänge vorgesehen und in die Kamera integriert ist.

22. Kopiervorrichtung nach einem der Ansprüche 1 bis 21, mit einer Blendenautomatik (82) mit Blenden-Stellmotor (83) zur Regelung der Aufnahmeempfindlichkeit.

23. Kopiervorrichtung nach einem der Ansprüche 1 bis 22, als autonomes Gerät mit einer SCSI-Datenschnittstelle als Steuereingang und als ein Datenausgang desselben.

24. Kopiervorrichtung nach einem der Ansprüche 1 bis 23, bei der die Sensorzellen (12) der Sensorzeile des Zeilensensors (201) parallel ausgelesen werden und jede Sensorzelle (12) über je einen Komparator (203) mit einem Zeichenspeicher (204) und dessen für alle Sensorzellen (12) gemeinsamer Ausgabelogik (205) verbunden ist, und bei dem alle Komparatoren (203) gemeinsam mit einem Treppensignal (272) zu takten sind, wobei der Takt dieses Signals auch der Ausgabelogik zugeführt wird, um eine Zuordnung eines in einem der Komparatoren (203) erfaßten Sensorsignals seiner zugehörigen Sensorzelle (12) und dieser betreffenden Sensorzelle zu erreichen.

25. Kopiervorrichtung nach Anspruch 24,
bei der der Zeilensensor (201) je einem Verstärker (202) zwischen der einen Sensorzelle (12) und ihrem Komparator (203) aufweist.

26. Kopiervorrichtung nach Anspruch 24 und 25,
bei der die Schaltungen aus Komparator (203) und Zeilenspeicher (204) beidseitig der Sensorzeile (2) angeordnet sind und die aufeinanderfolgenden Sensorzellen (12) untereinander abwechselnd mit einer Schaltung auf der einen Seite bzw. auf der anderen Seite verbunden sind.

27. Kopiervorrichtung nach einem der Ansprüche 1 bis 26, mit einem Mikroskop als Optik.

28. Kopiervorrichtung nach einem der Ansprüche 1 bis 26, zusammen mit einem graphik-fähigen Drucker.

29. Verwendung einer Kopiervorrichtung nach einem der Ansprüche 1 bis 26,
zur Ablichtung/Betrachtung von auf photographischem Film gespeicherten Bildern.

30. Kopiervorrichtung nach einem der Ansprüche 1 bis 26, bei der die Beleuchtungsquelle (9) eine schnelle Leuchtstoffröhre umfaßt.

31. Betrieb einer Kopiervorrichtung nach einem der Ansprüche 1 bis 26,
mit zeitgleichem Auslesen bzw. Ablichten und Drucken einer jeweiligen Zeile der Vorlage.

## Claims

1. Copying device, particularly for books,
with a scanner camera (1) for scanning documents which can be illuminated for a copying process,
with an adjustable lens system (5) for the light-optical projection of the document into an image plane (4) of the scanner camera (1),
the scanner camera comprising a photoelectric line sensor (2) with which the image of the document in the image plane is scanned line-wise,
with an electronic circuit (71, 72) for obtaining an output signal from the scan signal of the line sensor (2) and for the transfer thereof to an output connection, characterized in that the scanner camera (1) is arranged above the document plane (14) and that a device (6-10) for setting and/or testing the optimal focus of the projection of a document in the image plane (4) of the scanner camera is provided, which comprises an optically imageable pattern structure (6) and a light source (9), so that by adjusting the lens system (5) an image of the pattern structure (6) is produced in the document plane (14) which can be checked in terms of its focus.

2. Copying device according to Claim 1, in which the pattern structure (6) can be physically brought into the image plane (4) for the setting and/or test procedure.

3. Copying device according to Claim 1, in which the pattern structure (6) can be projected into the image plane (4) of the camera (1) by means of a lens system (100) provided for it.

4. Copying device according to Claim 1 or 2, characterized in that the pattern structure (6) is a structure situated on a plate (7), this plate being arranged in the camera so that it can be folded away (71) in such a way that for the read-out process it leaves space for the sensor (2) used for this purpose to scan the image plane (4) .

5. Copying device according to Claim 1, 2 or 3, characterized in that the pattern structure (6) is a structure situated on a stiff film, this stiff film being arranged in the camera in such a way that for the read-out process, through displacement it leaves space for the sensor (2) used for this purpose to scan the image plane (4) .

6. Copying device according to Claim 4 or 5,
in which the plate or the film is transparently translucent, the light source is located behind the pattern structure in relation to the lens system (5) and the pattern structure (6) is displayed projected as a black pattern.

7. Copying device according to Claim 4 or 5,
in which the light source is arranged to the side of the plate or the film in such a way that the plate or film then functions as a lightguide.

8. Copying device according to one of Claims 1 to 7, in which the pattern structure (6) in the image plane (49) fills the entire area of the projection surface and thus indicates the size of the active surface of the camera, set with the lens system (5), in the object plane (14) or on the document.

9. Copying device according to one of Claims 1 to 8, with an auto-focus device (41-43) for the iterative determination of the focus of the lens system (5) with respect to the pattern structure (6).

10. Copying device according to Claim 9,
in which a semireflecting mirror (41) is provided, in order to project the pattern structure (6) into the image plane (4) from one direction by means of its lens system (100) and to check, from another direction by means of a focus sensor (42) provided for this purpose and its lens system (43), the focus of that image of the pattern structure (6) which is produced in the plane (14) of the document to be copied by means of the lens system (5) of the camera (1).

11. Copying device according to one of Claims 1 to 10, with a semiconductor CCD line sensor.

12. Copying device according to one of Claims 1 to 11, with a line sensor (201) for parallel read-out.

13. Copying device according to Claim 12,
with a heating device for the line sensor (2).

14. Copying device according to one of Claims 1 to 13, in which the line sensor (2) is displaced by means of stepwise parallel displacement in the image plane (4) over the projection surface for the purpose of line-wise scanning.

15. Copying device according to Claim 14,
in which the parallel displacement of the line sensor (2) takes place on guide rails (3) by means of drive by a stepping motor (62).

16. Copying device according to Claim 14,
in which the parallel displacement of the line sensor (2) takes place on guide rails (3) by means of drive by a stepping motor (62) using a toothed wheel-toothed rack drive (63, 61).

17. Copying device according to Claim 16,
in which the drive motor (62) is located on the carriage of the line sensor and drives a shaft fitted there, the ends of which are provided with toothed wheels (63), these toothed wheels (63) running on toothed racks (61) of the guide plane (3).

18. Copying device according to Claim 14 or 15,
with a hydraulic drive system (Fig. 6a) for the movement of the line sensor (2),
this drive system comprising a master piston cylinder unit (34, 35) with a servo/stepping motor (62) to drive it, a hydraulic line system (33) and a slave piston cylinder unit (30, 31, 32) and the piston or pistons (31) of the latter unit (30, 31, 32) being in pushing and/or pulling connection with the line sensor (2) to be displaced.

19. Copying device according to Claim 14 or 15,
with a hydraulic drive system (Fig. 6b) for the movement of the line sensor (2),
this drive system comprising a device (134, 36) driven by a servo/stepping motor (62) and controllably conveying a hydraulic medium (301), a hydraulic line system (33), a slave piston cylinder unit (30, 31, 32) and an equalizing reservoir (38), the piston or pistons (31) of the latter unit (30, 31, 32) being in pushing and/or pulling connection with the line sensor (2) to be displaced.

20. Copying device according to one of Claims 1 to 19, with a swivel/rotating mirror device (23), with which the projection surface, scanned line-wise, is reflected out of the image plane (4) onto the photoelectric receiving surface (12) of the line sensor (2) by swivelling or rotation of the mirror.

21. Copying device according to one of Claims 1 to 20, in which a keyboard (86) for activating the individual operating procedures is provided and is integrated in the camera.

22. Copying device according to one of Claims 1 to 21, with an automatic exposure means (82) with diaphragm servomotor (83) for controlling the imaging sensitivity.

23. Copying device according to one of Claims 1 to 22, as a stand-alone unit with an SCSI data interface as control input and as a data output thereof.

24. Copying device according to one of Claims 1 to 23, in which the sensor cells (12) of the sensor line of the line sensor (201) are read out in parallel and each sensor cell (12) is connected via a respective comparator (203) to a line store (204) and its output logic (205) common to all sensor cells (12), and in which all comparators (203) can be clocked together with a stepped signal (272), the clock beat of this signal also being supplied to the output logic, in order to establish a correlation of a sensor signal detected in one of the comparators (203) relating to its associated sensor cell (12) and this relevant sensor cell.

25. Copying device according to Claim 24,
in which the line sensor (201) has an amplifier (202) in each case between the one sensor cell (12) and its comparator (203).

26. Copying device according to Claim 24 and 25, in which the circuits of comparator (203) and line store (204) are arranged on both sides of the sensor line (2) and the successive sensor cells (12) are connected together alternately to a circuit on one side and on the other side.

27. Copying device according to one of Claims 1 to 26, with a microscope as the lens system.

28. Copying device according to one of Claims 1 to 26, together with a printer that is capable of printing graphics.

29. Use of a copying device according to one of Claims 1 to 26,
for photocopying/viewing images stored on photographic film.

30. Copying device according to one of Claims 1 to 26, in which the light source (9) comprises a rapid fluorescent tube.

31. Operation of a copying device according to one of Claims 1 to 26,
with simultaneous read-out or photocopying and printing of any line of the document.

## Revendications

1. Dispositif copieur, en particulier pour livres, comportant une caméra scanner (1) pour le balayage d'originaux à éclairer pour une opération de copie, comportant une optique (5) réglable pour la projection optique de l'original dans un plan d'image (4) de la caméra scanner (1), dans lequel la caméra scanner comprend un détecteur de lignes (2) photoélectrique, avec lequel l'image de l'original est balayée ligne par ligne dans le plan de l'image, comportant un circuit électronique (71, 72) pour obtenir un signal de sortie à partir du signal de balayage du détecteur de lignes (2) et pour sa transmission à un branchement de sortie, caractérisé en ce que la caméra scanner (1) est située au-dessus du plan (14) de l'original et en ce qu'un dispositif (6 à 10) est prévu pour le réglage et/ou la vérification de la netteté optimale d'image de la projection d'un original dans le plan d'image (4) de la caméra scanner, qui comprend une structure à dessin (6) reproductible optiquement et une source d'éclairage (9), de sorte que par réglage de l'optique (5) dans le plan (14) de l'original, il est produit une image, dont la netteté est vérifiable, de la structure à dessin (6).

2. Dispositif copieur selon la revendication 1, dans lequel la structure à dessin (6) doit être amenée concrètement dans le plan (4) de l'image pour l'opération de réglage et/ou de vérification.

3. Dispositif copieur selon la revendication 1, dans lequel la structure à dessin (6) doit être projetée dans le plan (4) de l'image de la caméra (1), au moyen d'une optique (100) prévue pour elle.

4. Dispositif copieur selon la revendication 1 ou 2, caractérisé en ce que la structure à dessin (6) est une structure se trouvant sur une plaque (7), cette plaque étant montée dans la caméra de manière à pouvoir être rabattue (71), de façon que pour le procédé d'extraction elle laisse de l'espace, au détecteur (2) utilisé à cet effet, en vue du balayage du plan (4) de l'image.

5. Dispositif copieur selon la revendication 1, 2 ou 3, caractérisé en ce que la structure à dessin (6) est une structure se trouvant sur une feuille rigide, cette feuille rigide étant placée dans la caméra de manière que par coulissement pour le procédé d'extraction elle laisse de l'espace au détecteur utilisé à cet effet, en vue du balayage du plan de l'image.

6. Dispositif copieur selon la revendication 4 ou 5, dans lequel la plaque ou la feuille est transparente, la source d'éclairage par rapport à l'optique (5) se trouve derrière la structure à dessin et la structure à dessin (6) est reproduite projetée en tant que dessin noir.

7. Dispositif copieur selon la revendication 4 ou 5, dans lequel la source d'éclairage est placée sur le côté de la plaque ou de la feuille de manière que celle-ci opère alors comme guide de lumière.

8. Dispositif copieur selon l'une des revendications 1 à 7, dans lequel la structure à dessin (6) remplit dans le plan d'image (49) toute la surface de projection et indique ainsi dans le plan (14) de l'objet ou sur l'original la grandeur, réglée chaque fois avec l'optique (5), de la surface active de la caméra.

9. Dispositif copieur selon l'une des revendications 1 à 8, comportant un dispositif autofocalisant (41 à 43) pour la détermination itérative de la mise au point de l'optique (5), en ce qui concerne la structure à dessin (6).

10. Dispositif copieur selon la revendication 9, dans lequel est prévu un miroir (41) semi-perméable, afin de projeter partir d'une direction la structure à dessin (6) au moyen de son optique (100) dans le plan (4) de l'image et à partir d'une autre direction, au moyen d'un capteur focal (42) prévu à cet effet et de son optique (43), pour vérifier la mise au point de l'image de la structure à dessin (6), qui est produite au moyen de l'optique (5) de la caméra (1) dans le plan (14) de l'original à copier.

11. Dispositif copieur selon l'une des revendications 1 à 10, avec un détecteur de lignes CCD à semi-conducteurs.

12. Dispositif copieur selon l'une des revendications 1 à 11, avec un détecteur de lignes (201) détectant en parallèle.

13. Dispositif copieur selon la revendication 12, avec un dispositif de chauffage pour le détecteur de lignes (2).

14. Dispositif copieur selon l'une des revendications 1 à 13, dans lequel le détecteur de lignes (2) est déplacé sur la surface de projection en vue du balayage ligne par ligne, par déplacement parallèle pas à pas dans le plan (4) de l'image.

15. Dispositif copieur selon la revendication 14, dans lequel le déplacement parallèle du détecteur de lignes (2) sur des rails de guidage (3) s'effectue au moyen d'un entraînement par un moteur pas à pas (62).

16. Dispositif copieur selon la revendication 14, dans lequel le déplacement parallèle du détecteur de lignes (2) sur des rails de guidage s'effectue au moyen d'un entraînement par un moteur pas à pas (62) par utilisation d'une transmission à roue dentée et crémaillère (63, 61).

17. Dispositif copieur selon la revendication 16, dans lequel le moteur d'entraînement (62) se trouve sur le chariot du détecteur de lignes et entraîne un arbre placé à cet endroit, qui est pourvu de roues dentées (63) à ses extrémités, ces roues dentées (63) passant sur des crémaillères (61) du plan de guidage (3).

18. Dispositif copieur selon la revendication 14 ou 15, avec un système d'entraînement hydraulique (figure 6a) pour le déplacement du détecteur de lignes (2), dans lequel ce système d'entraînement comporte une unité à cylindre et piston transmetteuse (34, 35) avec un moteur pas à pas de réglage (62) pour son entraînement, un système de conduite hydraulique (33) et une unité à cylindre et piston de réception (30, 31, 32) et dans lequel le ou les pistons (31) de la dernière unité (30, 31, 32) est ou sont en liaison de poussée et/ou de traction avec le détecteur de lignes (2) ) à déplacer.

19. Dispositif copieur selon la revendication 14 ou 15, comportant un système d'entraînement hydraulique (figure 6b) pour le déplacement du détecteur de lignes (2), dans lequel ce système d'entraînement comporte un dispositif (134, 36) entraîné par un moteur pas à pas de réglage (62) et faisant circuler de manière commandée un fluide hydraulique (301), un système de conduite hydraulique (33), une unité à cylindre et piston de réception (30, 31, 32) et un réservoir d'équilibrage (38), dans lequel le ou les piston(s) (31) de la dernière unité (30, 31, 32) est ou sont en liaison de poussée et/ou de traction avec le détecteur de lignes (2) à déplacer.

20. Dispositif copieur selon l'une des revendications 1 à 19, comportant un dispositif à miroir pivotant/tournant (23), avec lequel la surface de projection est balayée ligne par ligne par pivotement ou rotation du miroir, est réfléchie à partir du plan (4) de l'image sur la surface de réception photoélectrique (12) du détecteur de lignes (2).

21. Dispositif copieur selon l'une des revendications 1 à 20, dans lequel un clavier (86) est prévu pour l'activation des différentes opérations de fonctionnement et est intégré dans la caméra.

22. Dispositif copieur selon l'une des revendications 1 à 21, comportant un obturateur automatique (82) avec moteur de réglage d'obturateur (83) en vue du réglage de la sensibilité.

23. Dispositif copieur selon l'une des revendications 1 à 22, en tant qu'appareil autonome avec une interface de données (SCSI) en tant qu'entrée de commande et en tant que sortie de commande de celui-ci.

24. Dispositif copieur selon l'une des revendications 1 à 23, dans lequel les cellules (12) des lignes du détecteur de lignes (201) sont lues parallèlement et chaque cellule (12) du détecteur est reliée par un comparateur (203) à une mémoire de caractères (204) et sa logique de sortie (205) commune à toutes les cellules (12), et dans lequel tous les comparateurs (203) doivent être synchronisés conjointement avec un signal échelonné (272), le rythme de ce signal étant envoyé aussi à la logique de sortie, pour obtenir une affectation d'un signal de détecteur détecté dans l'un des comparateurs (203), à sa cellule de détecteur (12) correspondante et cette cellule de détecteur concernée.

25. Dispositif copieur selon la revendication 24, dans lequel le détecteur de lignes (201) comporte un amplificateur (202) entre une cellule de détecteur (12) et son comparateur (203).

26. Dispositif copieur selon les revendications 24 et 25, dans lequel les circuits constitués du comparateur (203) et de la mémoire de lignes (204), sont situés de part et d'autre de la ligne de détecteur et les cellules de détecteur (12) successives sont reliées alternativement avec un circuit sur un côté ou l'autre côté.

27. Dispositif copieur selon l'une des revendications 1 à 26, avec un microscope en tant qu'optique.

28. Dispositif copieur selon l'une des revendications 1 à 26, conjointement avec une imprimante graphique.

29. Utilisation d'un dispositif copieur selon l'une des revendications 1 à 26 pour photocopie/observation d'images stockées sur film photographique.

30. Dispositif copieur selon l'une des revendications 1 à 26, dans lequel la source d'éclairage (9) comprend un tube phosphorescent rapide.

31. Exploitation d'un dispositif copieur selon l'une des revendications 1 à 26, avec sélection ou photocopie et impression simultanées d'une ligne de l'original.
